# FASCICULE DE BREVET EUROPEEN

(11) **EP 3 848 216 B1**
(45) Date de publication et mention de la délivrance du brevet: **29.11.2023**
(21) Numéro de dépôt: 21151068.0
(22) Date de dépôt: 12.01.2021
(51) Int. Cl.: B60K 15/067

(54) **RÉSERVOIR DE CARBURANT DE VÉHICULE AUTOMOBILE**
BRENNSTOFFTANK EINES KRAFTFAHRZEUGS
FUEL TANK OF A MOTOR VEHICLE

(30) Priorité: 13.01.2020 FR 2000250
(43) Date de publication de la demande: 14.07.2021
(73) Titulaire: Renault s.a.s, 92100 Boulogne Billancourt (FR)
(72) Inventeur: BALAS, Oana Maria, Bucharest, (RO); ENE, Alexandru, 041715 Bucarest (RO)
(74) Mandataire: Renault Group

(56) Documents cités:
- JP-A- 2007 168 455
- JP-U- S5 780 322
- US-A1- 2018 201 124

## Description

La présente invention concerne, de manière générale, le réservoir de carburant d'un véhicule automobile.

En particulier, l'invention se rapporte à la protection contre le feu des zones de fixation du réservoir de carburant à la caisse d'un véhicule automobile. Plus précisément encore, elle se rapporte à une attache métallique de protection contre le feu des zones de fixation du réservoir de carburant.

Classiquement, le réservoir est formé par deux demi-coques, une coque supérieure et une coque inférieure, soudées l'une à l'autre et formant une zone de remplissage de carburant. JP S57 80322 divulgue un réservoir de carburant en deux demi-coques.

Une pluralité de zones ou supports de fixation du réservoir sur la caisse du véhicule sont formés par un prolongement de matière des demi-coques, à la jonction des demi-coques.

Le réservoir est attaché à la caisse par des moyens de fixation, généralement des boulons, fixés au niveau de ces supports de fixation.

Lors d'incendies du véhicule, ces zones de fixation deviennent des zones hautement à risques. Les règlementations en vigueur imposent une certaine durée durant laquelle le réservoir doit rester fixé à la caisse et aucune fuite de carburant ne doit survenir. En effet, compte tenu de la quantité de carburant renfermée dans le réservoir de carburant, le détachement du réservoir de la caisse sous l'action du feu ou de la chaleur pourrait avoir de graves conséquences dont l'aggravation du feu liée à d'éventuelles fuites de carburant, voire l'explosion du véhicule.

Par mesure de sécurité et pour répondre aux règlementations des véhicules automobiles, les moyens de fixation des supports de fixation nécessitent donc d'être protégés du feu de telle façon que la fixation du réservoir sur la caisse soit maintenue aussi longtemps que possible.

Il est connu d'ajouter une attache métallique formant une bande s'étendant de part et d'autre de la coque supérieure, fixée par ses deux extrémités libres à deux supports de fixation disposés de part et d'autre du réservoir.

Cependant, une telle attache ne permet pas de respecter la durée de résistance au feu des fixations imposée par les règlementations.

Suivant un perpétuel effort des constructeurs automobiles d'allègement des véhicules, visant notamment à améliorer leurs performances, il est également nécessaire de réduire le poids de ces moyens de protection.

De plus, les moyens de protection des supports de fixation ne doivent pas impacter le volume intérieur du réservoir.

L'invention a donc pour but de remédier à ces inconvénients et de proposer un moyen allégé et amélioré de protection des zones de fixation du réservoir de carburant sur la caisse du véhicule, réalisable à moindre coût et n'impactant pas le volume intérieur du réservoir.

Il est donc proposé un réservoir de carburant pour véhicule automobile, comprenant :
un assemblage de deux demi coques formant une zone de remplissage de carburant ;
un ou plusieurs supports de fixation pour la fixation du réservoir de carburant à la caisse du véhicule automobile formés par un prolongement de matière des deux demi coques à la jonction des demi coques, les supports de fixation comportant une première surface formée par l'une des demi coques, une deuxième surface formée par l'autre des demi coques opposée à la première surface, et au moins un orifice de fixation ; et
des moyens de fixation des supports de fixation sur la caisse du véhicule automobile.

En outre, un ou plusieurs des supports de fixation comprend une attache métallique comportant une première portion apte à coopérer avec la première surface du support de fixation, et une deuxième portion s'étendant depuis la première portion et formant une patte d'accrochage dimensionnée pour coopérer avec la deuxième surface du support de fixation pour le maintien de l'attache métallique sur le support de fixation.

De préférence, l'attache métallique comprend un orifice disposé sur la première portion de façon à coopérer avec l'orifice de fixation du support de fixation pour la fixation simultanée de l'attache métallique au support de fixation et du support de fixation à la caisse par lesdits moyens de fixation.

Avantageusement, au moins une attache métallique et un support de fixation peuvent comprendre des moyens d'alignement de l'attache métallique sur le support de fixation.

De plus, le support de fixation peut comprendre un ou plusieurs ergots d'alignement de l'attache métallique coopérant chacun avec un orifice de l'attache métallique.

Selon l'invention l'attache métallique comporte une troisième portion s'étendant depuis la première portion et formant une deuxième patte d'accrochage dimensionnée pour coopérer avec la deuxième surface du support de fixation pour le maintien de l'attache sur le support de fixation.

De préférence, les moyens de fixation sont des moyens de fixation amovibles.

L'invention se rapporte également à un véhicule automobile comprenant un réservoir de carburant comme décrit précédemment.

D'autres buts, avantages et caractéristiques ressortiront de la description qui va suivre, donnée à titre purement illustratif et faite en référence aux dessins annexés sur lequel :
[Fig 1] est une vue de dessus d'un réservoir de carburant pour véhicule automobile disposé dans son environnement, comprenant des attaches métalliques, conforme à l'invention.
[Fig 2] est une vue en perspective éclatée du réservoir de carburant et des attaches métalliques illustrées à la figure 1.
[Fig 3] est une vue en perspective d'un support de fixation surmonté d'une attache métallique du réservoir de carburant illustré à la figure 1.
[Fig 4] est une vue en perspective de dessus du support de fixation illustré à la figure 3, comprenant des moyens de fixation de l'attache métallique.
[Fig 5] est une vue en perspective de dessous du support de fixation illustré à la figure 4, représentant deux pattes d'accrochage de l'attache métallique en position desserrée de montage.
[Fig 6] est une vue en perspective de dessous du support de fixation illustré à la figure 4, représentant deux pattes d'accrochage de l'attache métallique en position serrée sur le support de fixation.

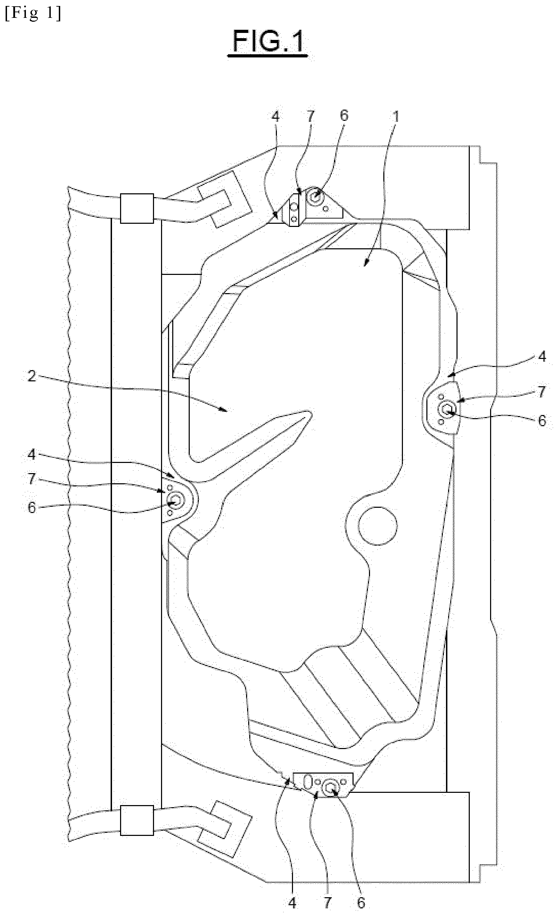

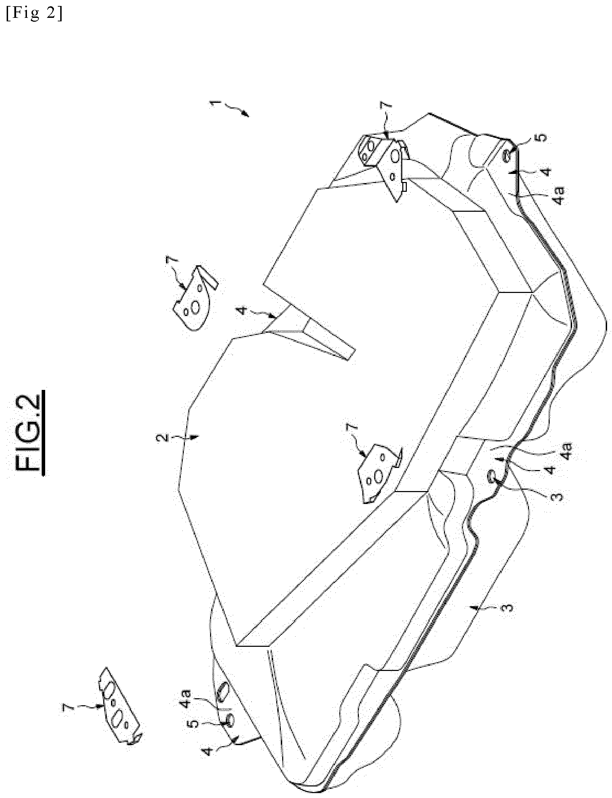

Les figures 1 et 2 représentent un réservoir de carburant 1 de véhicule automobile.

Le réservoir de carburant 1 comprend un assemblage de deux demi coques, une coque supérieure et une coque inférieure idéalement soudées l'une à l'autre, formant une zone de remplissage de carburant.

Le réservoir de carburant 1 comprend également un ou plusieurs supports de fixation 4, quatre supports de fixation dans l'exemple illustré, pour la fixation du réservoir de carburant 1 sur la caisse du véhicule automobile.

Les supports de fixation 4 sont formés par prolongement de matière, de préférence sensiblement vertical, des deux demi coques 2 et 3 à la jonction des demi coques 2 et 3.

Les supports de fixation 4 comportent une première surface 4a formée par l'une des demi coques, par exemple la coque supérieure 2 et une deuxième surface 4b opposée à la première surface, formée par l'autre des demi coques, par exemple la coque inférieure 3.

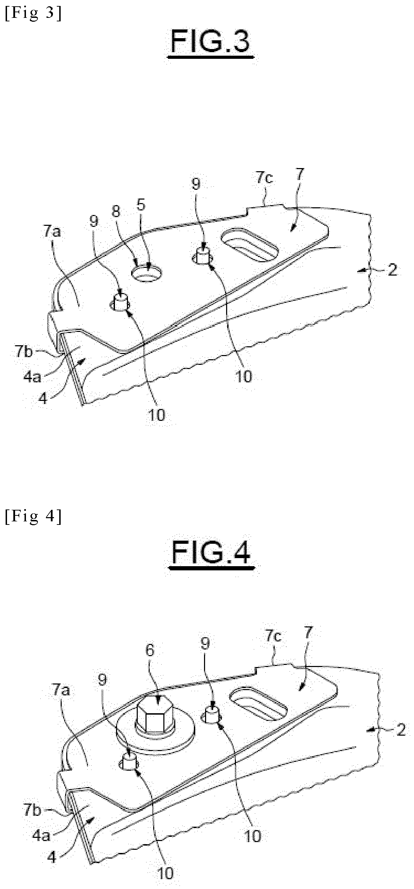

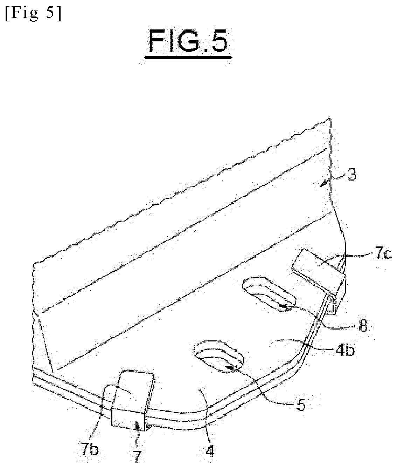

Comme on peut le voir aux figures 4 et 5, au moins un orifice de fixation 5 est ménagé dans chaque support de fixation 4, et le réservoir de carburant 1 comprend des moyens de fixation 6 des supports de fixation 4 sur la caisse du véhicule automobile.

Les moyens de fixation sont de préférence des moyens de fixation amovibles. Les moyens de fixation 6 comprennent, par exemple, un ensemble vis et écrou.

De plus, un ou plusieurs des supports de fixation 4 comprend une attache métallique 7.

Dans l'exemple illustré, chaque support de fixation 4 comporte avantageusement une attache métallique 7.

L'attache métallique 7 comporte une première portion 7a apte à coopérer avec la première surface 4a du support de fixation 4. Lorsque l'attache est disposée sur le support de fixation 4, comme cela est illustré sur les figures 4 à 6, la première portion 7a repose sur tout ou partie de la première surface 4a du support de fixation 4.

La forme de la première portion 7a des attaches métalliques 7 est de préférence adaptée à la forme du support de fixation 4 qui est lui-même adapté à l'architecture de la caisse du véhicule sur laquelle le réservoir de carburant est fixé.

Une deuxième portion 7b s'étend depuis la première portion 7a et forme une patte d'accrochage dimensionnée pour coopérer avec la deuxième surface 4b du support de fixation pour le maintien de l'attache métallique 7 sur le support de fixation 4.

Selon l'invention l'attache métallique comporte une troisième portion 7c s'étendant depuis la première portion et formant une deuxième patte d'accrochage dimensionnée pour coopérer avec la deuxième surface du support de fixation pour le maintien de l'attache sur le support de fixation.

Avantageusement, l'attache métallique 7 comprend également un orifice 8, disposé sur la première portion 7a, pour sa fixation sur le support de fixation 4.

Selon un mode de réalisation, l'orifice 8 coopère avec l'orifice de fixation 5 du support de fixation 4 de sorte qu'il soit possible de fixer simultanément l'attache métallique 7 au support de fixation 4 et le support de fixation 4 à la caisse par les moyens de fixation 6.

Aucun outil supplémentaire ni aucune autre étape ne sont donc nécessaires pour la fixation de l'attache métallique au support de fixation 4.

De plus, on pourra prévoir que les attaches métalliques 7 et les supports de fixation 4 comprennent des moyens d'alignement de l'attache métallique 7 sur le support de fixation 4.

Les moyens d'alignement peuvent comporter un ou plusieurs ergots d'alignement 9 ménagés sur les supports de fixation 1, pour l'alignement de l'attache métallique 7, coopérant chacun avec un orifice 10 ménagé sur l'attache métallique 7.

Les moyens d'alignement permettent avantageusement un alignement de l'attache métallique 7 sur le support de fixation dans un plan vertical et dans un plan horizontal.

Selon l'exemple illustré, le support de fixation 4 comprend deux ergots d'alignement 9 et l'attache métallique 7 comprend deux orifices 10 de réception des ergots d'alignement 9.

Par exemple, les ergots peuvent correspondre à des dômes s'étendant depuis la première surface 4a du support de fixation.

Comme cela est représenté sur la figure 5, les pattes d'accrochages 7b et 7c sont, de préférence, initialement en position desserrée pour la mise en place facilitée des attaches métalliques 7 sur leur support de fixation 4.

Les moyens d'alignement 9 facilitent la mise en place des attaches métalliques 7 sur les supports de fixation 4.

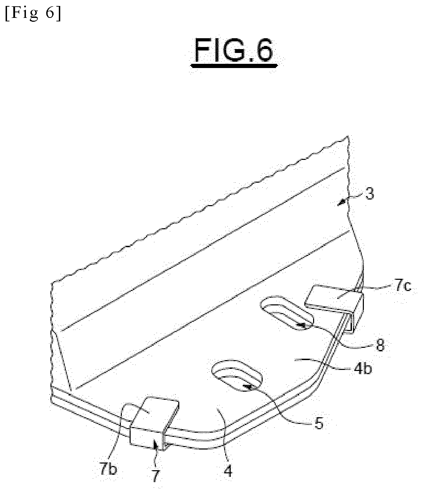

Lorsque les attaches métalliques 7 sont correctement disposées et centrées sur les supports de fixation, les pattes d'accrochage 7b et 7c peuvent être rabattues de façon à ce qu'elles soient serrées contre la deuxième surface 4b du support de fixation, comme cela est représenté à la figure 6.

Les attaches métalliques constituent ainsi un moyen simple et peu coûteux améliorant la résistance au feu des moyens de fixation du réservoir de carburant sur la caisse du véhicule automobile.

## Revendications

1. Réservoir de carburant pour véhicule automobile, comprenant :
un assemblage de deux demi coques (2, 3) formant une zone de remplissage de carburant ;
un ou plusieurs supports de fixation (4) pour la fixation du réservoir de carburant (1) à la caisse du véhicule automobile formés par un prolongement de matière des deux demi coques (2, 3) à la jonction des demi coques (2, 3), les supports de fixation (4) comportant une première surface (4a) formée par l'une des demi coques (2, 3), une deuxième surface (4b) formée par l'autre des demi coques (2, 3) opposée à la première surface (4a), et au moins un orifice de fixation (5) ; et
des moyens de fixation (6) des supports de fixation (4) sur la caisse du véhicule automobile,
un ou plusieurs des supports de fixation (4) comprend une attache métallique (7) comportant :
- une première portion (7a) apte à coopérer avec la première surface (4a) du support de fixation (4),
- une deuxième portion (7b) s'étendant depuis la première portion (7a) et formant une patte d'accrochage dimensionnée pour coopérer avec la deuxième surface (4b) du support de fixation (4) pour le maintien de l'attache métallique (7) sur le support de fixation (4), et
- une troisième portion (7c) s'étendant depuis la première portion (7a) et formant une deuxième patte d'accrochage dimensionnée pour coopérer avec la deuxième surface (4b) du support de fixation (4) pour le maintien de l'attache métallique (7) sur le support de fixation (4).

2. Réservoir de carburant selon la revendication 1, **caractérisé en ce que** l'attache métallique (7) comprend un orifice (8) disposé sur la première portion (7a) de façon à coopérer avec l'orifice de fixation (5) du support de fixation (4) pour la fixation simultanée de l'attache métallique (7) au support de fixation (4) et du support de fixation (4) à la caisse par lesdits moyens de fixation (6).

3. Réservoir de carburant selon la revendication 1 ou 2, **caractérisé en ce qu'**au moins une attache métallique (7) et un support de fixation (4) comprennent des moyens d'alignement (9) de l'attache métallique sur le support de fixation.

4. Réservoir de carburant selon la revendication 3, **caractérisé en ce que** le support de fixation (4) comprend un ou plusieurs ergots (9) d'alignement de l'attache métallique (7) coopérant chacun avec un orifice (10) de l'attache métallique (7).

5. Réservoir de carburant selon l'une quelconque des revendications précédentes, les moyens de fixation (6) sont des moyens de fixation amovibles.

6. Véhicule automobile comprenant le réservoir de carburant selon l'une quelconque des revendications 1 à 5.

## Patentansprüche

1. Brennstofftank eines Kraftfahrzeugs, umfassend:
eine Anordnung aus zwei Halbschalen (2, 3), die einen Bereich zum Einfüllen von Brennstoff bilden;
eine oder mehrere Befestigungshalterungen (4) zur Befestigung des Brennstofftanks (1) an der Karosserie des Kraftfahrzeugs, die durch eine Materialverlängerung der beiden Halbschalen (2, 3) an der Verbindung der Halbschalen (2, 3) gebildet werden, wobei die Befestigungshalterungen (4) eine erste Oberfläche (4a), die von einer der Halbschalen (2, 3) gebildet wird, eine zweite Oberfläche (4b), die von der anderen der Halbschalen (2, 3) gegenüber der ersten Oberfläche (4a) gebildet wird, und mindestens eine Befestigungsöffnung (5) enthalten; und
Mittel (6) zum Befestigen der Befestigungshalterungen (4) an der Karosserie des Kraftfahrzeugs,
wobei eine oder mehrere der Befestigungshalterungen (4) eine Metallklammer (7) umfasst, enthaltend:
- einen ersten Abschnitt (7a), der mit der ersten Oberfläche (4a) der Befestigungshalterung (4) zusammenwirken kann,
- einen zweiten Abschnitt (7b), der sich von dem ersten Abschnitt (7a) erstreckt und eine Einhaklasche bildet, die so bemessen ist, dass sie mit der zweiten Oberfläche (4b) der Befestigungshalterung (4) zusammenwirkt, um die Metallklammer (7) an der Befestigungshalterung (4) zu sichern, und
- einen dritten Abschnitt (7c), der sich von dem ersten Abschnitt (7a) erstreckt und eine zweite Einhaklasche bildet, die so bemessen ist, dass sie mit der zweiten Oberfläche (4b) der Befestigungshalterung (4) zusammenwirkt, um die Metallklammer (7) an der Befestigungshalterung (4) zu sichern.

2. Brennstofftank nach Anspruch 1, **dadurch gekennzeichnet, dass** die Metallklammer (7) eine Öffnung (8) umfasst, die an dem ersten Abschnitt (7a) so angeordnet ist, dass sie mit der Befestigungsöffnung (5) der Befestigungshalterung (4) zusammenwirkt, um die Metallklammer (7) gleichzeitig an der Befestigungshalterung (4) und die Befestigungshalterung (4) an der Karosserie durch die Befestigungsmittel (6) zu befestigen.

3. Brennstofftank nach Anspruch 1 oder 2, **dadurch gekennzeichnet, dass** mindestens eine Metallklammer (7) und eine Befestigungshalterung (4) Mittel (9) zur Ausrichtung der Metallklammer auf der Befestigungshalterung umfassen.

4. Brennstofftank nach Anspruch 3, **dadurch gekennzeichnet, dass** die Befestigungshalterung (4) eine oder mehrere Nasen (9) zum Ausrichten der Metallklammer (7) aufweist, die jeweils mit einer Öffnung (10) der Metallklammer (7) zusammenwirken.

5. Brennstofftank nach einem der vorhergehenden Ansprüche, wobei die Befestigungsmittel (6) abnehmbare Befestigungsmittel sind.

6. Kraftfahrzeug, das den Brennstofftank nach einem der Ansprüche 1 bis 5 umfasst.

## Claims

1. Fuel tank for a motor vehicle, comprising:
an assembly of two half-shells (2, 3) forming a fuel filling zone;
one or more fastening supports (4) for fastening the fuel tank (1) to the body of the motor vehicle that are formed by an extension of material of the two half-shells (2, 3) at the join of the half-shells (2, 3), the fastening supports (4) having a first surface (4a) formed by one of the half-shells (2, 3), a second surface (4b) formed by the other of the half-shells (2, 3), which is opposite the first surface (4a), and at least one fastening orifice (5); and
means (6) for fastening the fastening supports (4) to the body of the motor vehicle,
one or more fastening supports (4) comprises a metal attachment (7) having:
- a first portion (7a) able to cooperate with the first surface (4a) of the fastening support (4),
- a second portion (7b) extending from the first portion (7a) and forming an attachment tab dimensioned so as to cooperate with the second surface (4b) of the fastening support (4) for the holding of the metal attachment (7) on the fastening support (4), and
- a third portion (7c) extending from the first portion (7a) and forming a second attachment tab dimensioned so as to cooperate with the second surface (4b) of the fastening support (4) for the holding of the metal attachment (7) on the fastening support (4).

2. Fuel tank according to Claim 1, **characterized in that** the metal attachment (7) comprises an orifice (8) disposed on the first portion (7a) so as to cooperate with the fastening orifice (5) of the fastening support (4) for the simultaneous fastening of the metal attachment (7) to the fastening support (4) and of the fastening support (4) to the body by said fastening means (6) .

3. Fuel tank according to Claim 1 or 2, **characterized in that** at least one metal attachment (7) and one fastening support (4) comprise means (9) for aligning the metal attachment on the fastening support.

4. Fuel tank according to Claim 3, **characterized in that** the fastening support (4) comprises one or more lugs (9) for aligning the metal attachment (7) that each cooperate with an orifice (10) of the metal attachment (7) .

5. Fuel tank according to any one of the preceding claims, the fastening means (6) are removable fastening means.

6. Motor vehicle comprising the fuel tank according to any one of Claims 1 to 5.
